# EUROPEAN PATENT SPECIFICATION

(11) **EP 2 251 284 B1**
(45) Date of publication and mention of the grant of the patent: **29.02.2012**
(21) Application number: 10162512.7
(22) Date of filing: 11.05.2010
(51) Int. Cl.: B65G 65/23, B65G 65/46, B65D 88/56

(54) **Method and arrangement for unloading a container**
Verfahren und Vorrichtung zum Entleeren eines Containers
Procédé et dispositif pour vider un conteneur

(30) Priority: 11.05.2009 FI 20095527
(43) Date of publication of application: 17.11.2010
(73) Proprietor: Transitainer Shipping Oy, 02100 Espoo (FI)
(72) Inventor: Lampen, Henrik, FI-02100, Espoo (FI)
(74) Representative: Tanhua, Pekka Vilhelm

(56) References cited:
- US-A- 2 601 049
- US-B1- 6 409 274

## Description

The invention relates to a method according to the preamble of claim 1 for unloading a container.

The invention also relates to an arrangement according to the preamble of claim 8 for unloading a container.

Materials of the food and/or chemical industry, such as raw materials, semifinished products and end products, are transported as bulk cargo in freight containers, which are lined with large elastic bags. In form, these materials are often grainy, i.e. powdery and/or granulous materials, generally fluid materials. Said materials include for instance plastic grains, boric acid, ferrous sulfate, starch, malt, rice etc. Granulous material is packed in a large bag which most advantageously follows the inner surface of the container and conforms to the shapes thereof. An advantage with this kind of arrangement is that a freight container can be loaded directly from the storage or silo of a production plant or a similar establishment.

The container is unloaded, or the container is emptied of granular material by inclining the container in the longitudinal direction, so that the material flows, owing to gravity, towards the outlet and therethrough out of the lower end of the container and the large bag.

As an example of the state of the art, we refer to publications EP 1101712 A1, US 5626254 and US 2601049. Furthermore, US 6409274 discloses an arrangement in accordance with the preamble of claim 8.

The problem is that the container cannot always be emptied completely, because granular material easily sticks to the corners and pockets or similar recesses in the large bag. In addition, the nature of the material in question can be such that it is easily clogged. In that case the small solid particles of the material stick together, so that the fluidity of the material is reduced, and/or the material particles stick to the inner walls of the large bag, and they cannot be discharged from the bag by gravity only. Consequently, it is more difficult to empty the bag by means of gravity only. As a solution to the problem, among others the following has been suggested: the design of the container bottom and particularly corners should be made suitable, inflatable auxiliary bags should be installed in the container, and vibrating mechanisms should be used in connection with the unloading support surface. However, it can be stated that these suggested solutions do not function particularly well, when the contents of the container are for example largely clogged.

A typical method in a case where granular material is clogged is that the bag is broken and the contents are unloaded by means of a shovel or a corresponding tool. In that case the problem is that the discharging process is slow, the powdery and/or granular material makes dust, the material is subject to dirt and pollution, and the material may be hazardous to the persons working with the emptying process.

The object of the invention is to eliminate the above described drawbacks connected to the discharging of a container, as well as drawbacks generally connected to unloading a container. Another object of the invention is to realize a new method and arrangement for unloading a container, suitable to be used particularly for unloading or discharging granular material packed in a container and a large bag.

The method according to the invention for unloading a container is characterized by what is set forth in claim 1.

The arrangement according to the invention for unloading a container is characterized by what is set forth in claim 8.

The dependent claims introduce preferred embodiments of the invention.

The invention relates to a method for unloading a container, said container containing an elastic large bag, i.e. a bag containing granular material. According to the invention, in the method:
- a container complete with a bag is arranged on an unloading surface, provided with unloading means;
- the first end of the container, and the outlet aperture provided at the second end of the bag, i.e. its discharge end, are opened;
- the employed unloading element is a spiral conveyor comprising a conveyor pipe and a conveyor screw arranged therein, said spiral conveyor being fitted, before the unloading step proper, in an outlet aperture provided at the other end of the bag, so that the spiral conveyor extends to the interior of the bag, and to the material contained therein;
- whereafter the material is transferred out of the bag along the conveyor pipe by means of the spiral conveyor; and wherein
- as the unloading proceeds and the bag is gradually emptied, the unloading surface and the container attached thereto, with the included bag and unloading elements, are lifted to an inclined position with respect to the longitudinal direction of the container, so that the first end of the container and the discharge end of the bag are positioned lower than the other end of the container, in which case the material contained in the bag can be transferred, by means of gravity, to the discharge end of the bag and unloaded by the unloading element.

The term "granular material" here refers to powdery and/or grain-like materials that are advantageously fluid. Examples of said materials are already given above. The unloading of a container and/or a bag here means transferring the granular material out of the container or bag, i.e. at least partial emptying of the container or the bag.

In a preferred embodiment of a method according to the invention, the free end of the conveyor screw of the spiral conveyor is arranged to extend outside the inlet aperture of the conveyor pipe, at a distance therefrom, said free end of the conveyor screw being arranged to extend from the bag aperture to the interior of the bag.

In a preferred embodiment of a method according to the invention, the longitudinal axis of the conveyor screw of the spiral conveyor is arranged to be essentially in the longitudinal direction of that container and simultaneously of the bag.

In a second preferred embodiment of a method according to the invention, the position of the spiral conveyor, and particularly the position of the conveyor screw, is arranged to be adjustable in the direction of the longitudinal axis of the conveyor screw, and simultaneously in the longitudinal direction of the container and the bag.

In a third preferred embodiment of that method of the invention, the position of the spiral conveyor, and particularly the position of the conveyor screw, is arranged to be adjustable on the transversal plane, against the longitudinal direction of the container and the bag.

The invention also relates to an arrangement for unloading a container, said container containing a bag filled with granular material, which arrangement comprises: an unloading surface, provided with a lifting device for lifting the other end of the unloading surface, on which unloading surface the container with the bag should be fastened, so that that container is positioned in the longitudinal direction of the unloading surface, and the first end of the container and the second end of the bag, i.e. the discharge end, is located at the first end of the unloading surface; and an unloading device attached to the first end of the unloading surface, which unloading device comprises an unloading means. According to the invention the unloading means comprises a spiral conveyor provided with a conveyor pipe and a conveyor screw arranged therein, which spiral conveyor should be fitted, before the unloading step proper, in the outlet aperture provided at the other end of the bag, so that the spiral conveyor extends to the interior of the bag, and to the material contained therein; in which arrangement material is conveyed out of the bag along the conveyor pipe by using the spiral conveyor, and wherein, as the unloading proceeds and the bag is emptied, the unloading surface and the container attached thereto with the bag and the unloading device can be lifted to an inclined position in the longitudinal direction of the container, so that the first end of the container, the outlet end of the bag and at the same time the unloading device are placed lower than the second end of the container, in which case material contained in the bag can be transferred by gravity to the outlet end of the bag and unloaded by the unloading device out of the bag along the conveyor pipe of the spiral conveyor.

Some large bags are provided with a discharge channel. Advantageously the discharge channel of the bag is an elastic and flexible sock, with an outlet aperture provided at the free end. When the container complete with the bag should be unloaded, the bag is opened by straightening the folded sock out, so that also the outlet aperture is opened, whereafter a spiral conveyor is fitted at the outlet aperture of the bag. Thereafter the unloading step of the bag can be started.

Some other large bags are not provided with a separate discharge channel. When the container together with the bag should be unloaded, the bag is opened at an outlet aperture provided therein for example by cutting, and a spiral conveyor is fitted in said aperture. Thereafter the unloading step of the bag can be started.

In a preferred embodiment of the invention, the first end of the conveyor screw extends to outside the inlet aperture of the conveyor pipe, at a distance therefrom, and the free end of the conveyor screw should in the unloading step be arranged to extend from the outlet aperture to the interior of the bag.

An advantage of the invention is that the unloading of a container, and particularly the emptying thereof, is remarkably speeded up in comparison with the use of known unloading and/or emptying methods and arrangements. For example, the emptying of a container containing boric acid with conventional means may take even 20 h, whereas the duration of the emptying process can be cut down to even only one hour by utilizing the present invention.

Another advantage of the invention is cleanness, safety and in general a closed unloading process of the container with respect to the environment. By means of the invention, the unloading process is a closed operation, so that any remarkable material emissions or leaks to the environment do not occur, and also that the material transferred out of the container cannot be polluted.

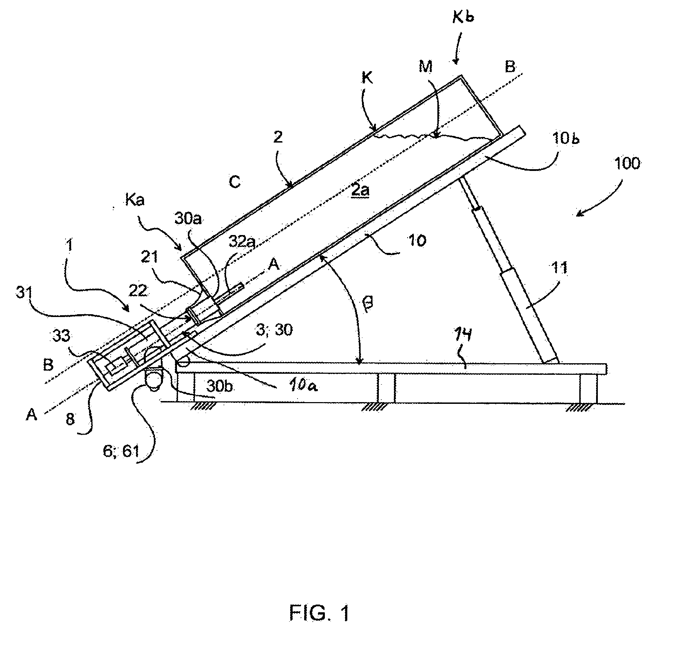

The invention and its further advantages are described in more detail below, with reference to the appended drawing, where
Figure 1 is a schematical side-view illustration of a situation where a freight container is being unloaded, and the container is tilted to an inclined position;

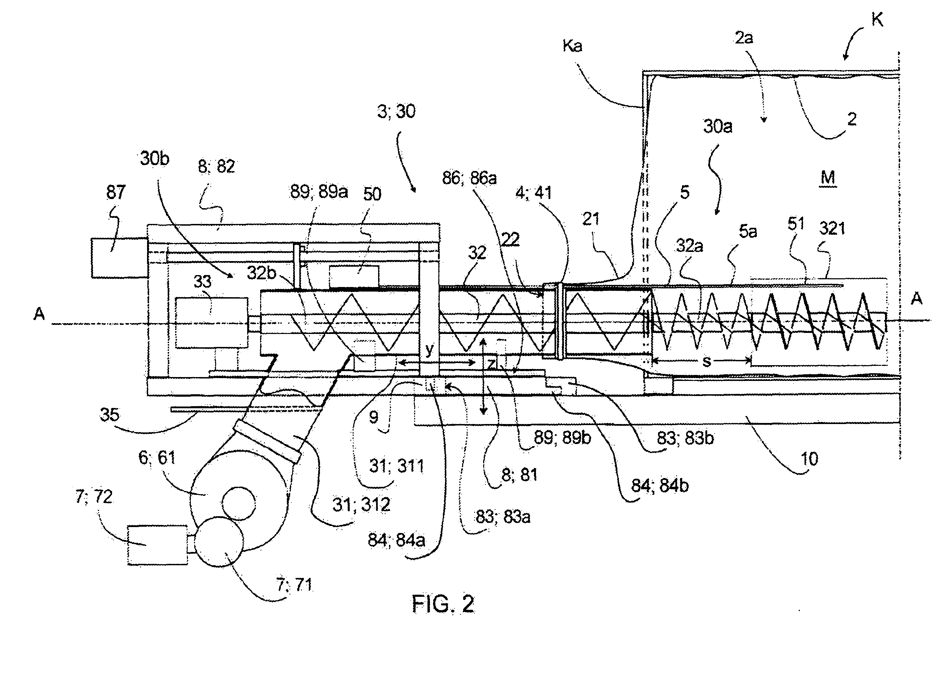

Figure 2 is a side-view illustration, shown in partial cross-section, of an arrangement according to the invention for unloading a container;

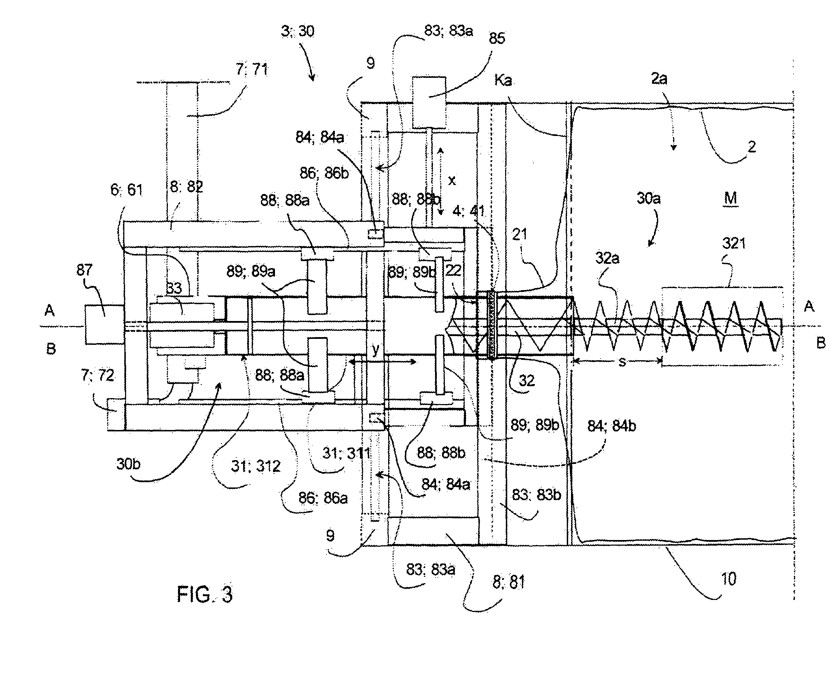

Figure 3 is a top-view illustration, shown in partial cross-section, of an arrangement according to the invention for unloading a container; and
Figure 4 is a schematical illustration, shown in partial cross-section, of a detail of an arrangement according to the invention for unloading a container, where the large bag fitted therein is not provided with a separate discharge channel.

Like reference numbers for like parts are used in the drawings.

The invention relates to a method and arrangement for unloading a container K, such as a freight container, a storage container or a corresponding closed space. The invention is designed for unloading a container K or a corresponding container, which is provided with an elastic large bag filled with granular material, i.e. a bag 2; 2¹. Preferably the volume of the bag 2; 2¹ corresponds to the volume of the container or a corresponding space, and when in use, it lines the interior of the container. The container and the bag 2; 2¹ are filled with a fluid material composed of small particles, i.e. with granular material. In a freight container or the like that is lined with this kind of bag 2; 2¹, there are transported for example the following finely divided materials: boric acid, starch, sugar, rice, grains, malt flour etc. flours, plastic grains etc. Advantageously the bag 2; 2¹ is made of a breathable and thus gas-permeable material, such as woven fabric or the like.

The container K is advantageously an elongate freight container with preferably standardized measures (ISO standard). When the granular material should be unloaded from the container and the bag 2; 2¹ arranged therein, the container is placed on an unloading surface 10 provided with unloading means 3. The container K is attached on the unloading surface 10 preferably with regular container fasteners. Doors provided at the first end Ka of the container are opened, and the unloading means 3 for emptying the container are connected to the bag 2, particularly to the outlet aperture 22 arranged at the second end of the bag, i.e. the outlet end.

In this exemplary case, the bag 2 comprises a discharge channel 21, which is preferably an elastic and flexible sock, with an outlet aperture 22 provided at the free end. The discharge channel 21 of the bag is routed out of the container, and the unloading device 1 for unloading the container is fitted in the bag 2 via the discharge channel to the bag 2.

When the unloading means 3 for unloading the container are connected to the bag 2, the transfer of the material out of the bag can be started. As the unloading process proceeds and the bag is emptied, the unloading surface 10 and the container K attached thereto are lifted, in the longitudinal direction B-B of the unloading surface 10, to an inclined position C, for example to an oblique angle β with respect to the surface of the earth or the like, such as the frame 14 of the unloading surface, with the lifting device 11 of the unloading surface, and so that the first end Ka of the container and simultaneously the unloading means 3 for unloading the container are placed lower than the second end Kb of the container. Thus the material contained in the bag 2 is shifted, by means of gravity, to the outlet end of the bag, and in this case towards the discharge channel 21 and the outlet aperture 22. As an alternative, the container K can be lifted, in the longitudinal direction B-B of the container and the unloading surface 10, to an inclined position C, the angle β of which can be suitably changed (for example first a small angle and in the end a large angle) already when starting the unloading operation.

The arrangement for unloading the container comprises a material unloading device 1, including a spiral conveyor 30 as the unloading means 3. In order to realize the emptying operation, the inlet end 30a of the spiral conveyor 30 should be fitted in the bag 2 via the discharge channel 21 thereof, so that the spiral conveyor 30 is directed towards the interior 2a of the bag 2. Now the outlet end 30b of the spiral conveyor 30 is located outside the discharge channel 12 and the bag 2. The bag 2 is unloaded by means of the spiral conveyor 30 through the discharge channel 21.

The unloading device 1 also comprises fastening means, i.e. first fastening means 4. For the duration of the unloading operation, the spiral conveyor 30 is detachably fastened by means of the fastening means 4 to the discharge channel 21.

Most advantageously the outlet end 30b of the spiral conveyor 30 is connected to a forward conveyor, by means of which the material unloaded from the bag 2 can be transferred to a suitable distance from the unloading site of the container K, for instance to a storage, preferably a storage silo or the like.

The spiral conveyor 30 comprises a conveyor pipe 31 and a rotary conveyor screw 32 fitted therein. The inlet end 30a of the spiral conveyor 30 is most advantageously realized so that the free end of the spiral conveyor 32, i.e. the first end 32a thereof, is arranged to protrude to a distance s from the inlet aperture 31a, to outside the conveyor pipe 31. When the spiral conveyor 30 is in the unloading step arranged to be in connection with the bag 2, and the bag 2 is fastened, at the discharge channel 21, by fastening means 4 suitably to the conveyor pipe 31, the first end 32a of the conveyor screw 32 is at the same time arranged to extend to the interior of the bag 2 and to the material M. The advantage is that by means of the first end 32a of the conveyor screw 32, both the detaching of the material from the bag and the unloading of the bag are carried out efficiently, and for example clogged material can be broken up.

In a preferred embodiment, the first fastening means 4 comprise a clamping collar 41. By means of it, the discharge channel 21 of the bag 2 is locked in the conveyor pipe 31, when the material should be transferred out of the bag 2, and respectively released from the conveyor pipe 31, when the unloading of the bag is ended, or when the bag has been emptied. The location of the clamping collar 41 in the conveyor pipe 31 is placed at a second distance k from the inlet aperture 31a of the conveyor pipe 31. The location of the clamping collar 41 is permanent, but the location can also be changed for example depending on the material M, and/or on the depth in which the spiral conveyor 30 should be arranged inside the bag 2 during the unloading step.

In a preferred embodiment of the invention, to the conveyor screw 32 of the spiral conveyor 3, particularly to the first end 32a thereof, there can be connected one (or even several) extensions 321. Thus the length of the free end 32a of the conveyor screw 32 and its distance s from the inlet aperture 31a can be increased, for example when the material is difficult to get out of the bag 2 in the unloading step. An advantage of extending the conveyor screw 32 by an extension 321 is, among others, that the conveyor screw 32 can be brought relatively deep inside the interior of the bag 2 and in the material M. This makes the unloading of the bag 2 easier, particularly with strongly clogged materials.

In a preferred embodiment of the invention, the spiral conveyor 30, particularly the longitudinal axis A - A of the conveyor screw 32, is arranged to be essentially in the longitudinal direction B - B o the container K and simultaneously of the unloading surface 10. At the same time the lengthwise axis A - A of the conveyor screw 32 is placed essentially in the longitudinal direction of the bag 2. In the unloading step, the container is preferably set in an inclined position C, so that a sub-component of gravity affects the material contained in the bag in the longitudinal direction of the container, and the conveyor pipe 31 of the spiral conveyor 30 also is placed in parallel, in which case the unloading situation is optimal for realizing a rapid and effective unloading operation.

In a preferred embodiment of the invention, the unloading device 1 for unloading a container also comprises fastening means, i.e. second fastening means 9 for detachably supporting the spiral conveyor 30 by fastening the container K to the unloading surface, when the container should be unloaded.

In a preferred embodiment of the invention, the unloading device 1 also comprises a frame 8, in connection with which the spiral conveyor 30 is arranged. The frame 8 is provided with second fastening means 9 for detachably fastening the device 1 to the unloading surface 10 of the container K and the bag 2. The spiral conveyor 30 is preferably arranged in the frame 8 so that the front end 3a of the spiral conveyor, i.e. the inlet aperture 31 a of the conveyor pipe, and at the same time also the first end 32a of the conveyor screw 32, are placed outside the frame 8. Thus the frame 8 does not disturb the fitting of the front end 3a of the spiral conveyor in the discharge channel 21 of the bag 2. The second fastening means 9 are counterpieces that fit in the container clamps or the like provided in the unloading surface 10.

The arrangement according to the invention is prepared to operating order for unloading a container K preferably as follows. The container K is attached to the unloading surface 10. The unloading device 1 is attached (or has already been attached) by the second fastening means 9 at the frame 8 to the container unloading surface 10, in the vicinity of the rear end Ka of the container K, so that the conveyor pipe 31 of the spiral conveyor 30 is located behind the container K, preferably in a position where it is advantageously placed in the longitudinal direction B - B of the container. The doors at the rear end Ka of the container K are opened, the discharge channel 21 of the bag 2 is pulled out of the container, and the spiral conveyor 3 of the unloading device 1, particularly the conveyor pipe 31 and the conveyor screw 32, are fitted through the outlet aperture 22 to inside the discharge channel 21, so that the first end 32a of the conveyor screw 32 extends to inside the bag 2 and to the granular material M to be unloaded. Thereafter the discharge channel 21 of the bag is fastened, by a first fastening element 4, preferably as compactly as possibly, around the conveyor pipe 31 of the spiral conveyor. Now the unloading of the container K and the bag 2 can be started.

In a preferred embodiment, the unloading device 1 for unloading a container comprises at least one pipe 5, the first end i.e. the free end 5a whereof is arranged to extend to outside the inlet aperture 31a of the conveyor pipe 31 of the spiral conveyor 30, to the area of the free end 32a of the conveyor screw 32, i.e. to the length s thereof. The other end of the pipe 5 is connected to a suitable auxiliary medium source 50, from which pressurized air, gas or other fluid medium is fed through the pipe 5 to the working area of the conveyor screw 32, to inside the bag 2, particularly in the material M, as the bag is being emptied. Preferably the pipe 5 is open at its free end 5a. The pipe 5 can also be provided with one or several apertures that are arranged in the area of the free end 32a of the conveyor screw 32.

In a preferred embodiment of the invention, at the first end 5a of the pipe 5, there can be connected one (or even several) extensions 51. Thus also the pipe 5 can be extended, particularly in a case where the conveyor screw 32 has been extended, i.e. an extension 321 (one or several) has been added at its free end 32a.

In a preferred embodiment of the invention, the conveyor pipe 31 of the spiral conveyor 30 is realized of two conveyor pipe elements 311, 312. The conveyor pipe 31 comprises a first conveyor pipe element 311, which is preferably an essentially straight element. The conveyor screw 32 is fitted rotatably inside the first conveyor pipe element 311, and the free end 32a of the conveyor screw 32 is arranged to protrude through the inlet aperture 31 a of said first conveyor pipe element 311, and to extend to a suitable distance s.

The actuating motor 33 of the conveyor screw 32, preferably an electric motor, is advantageously fitted at the other end 31 b of the conveyor pipe 31, for instance at the other end of the first conveyor pipe element 311 of said preferred embodiment, on the longitudinal axis A - A of the conveyor screw 32, outside the conveyor pipe. The other end 32b of the conveyor screw 32 is connected to the actuating motor 33. Now the inlet end of the first conveyor pipe element 311, particularly the inlet aperture 31a, forms the inlet end 30a of the spiral conveyor 30.

The conveyor pipe 31 comprises a second conveyor pipe element 312, which is advantageously, but not necessarily, a straight element. The second conveyor pipe element 312 is connected at an angle α to the first conveyor pipe element 311, preferably to the second end 31 b thereof. Moreover, the second conveyor pipe element is in this case arranged on an essentially vertical plane with respect to the first conveyor pipe element 311, and so that it is directed downwardly. The conveyor channel formed by the first conveyor pipe element 311 is arranged to continue at said angle α to the conveyor channel formed by the second conveyor pipe element 312. The outlet end of the second conveyor pipe element 312, particularly the outlet aperture, now forms the outlet end 3b of the spiral conveyor, through which the material M is in the unloading step transferred out of the bag 2.

In an embodiment of the invention, the second end 31b of the conveyor pipe 31, such as of the first conveyor pipe element 311, is provided with an aperture 34, particularly for cleaning the conveyor pipe after the bag 2 has been emptied. The aperture 34 is provided with a hatch 34a. When the spiral conveyor 30 is being used, i.e. during the unloading step, the aperture 34 is closed by said hatch 34a. When the conveyor pipe 31; 311, 312 should be checked and cleaned, the hatch 34a is opened, and water or other corresponding cleaning solution or the like is sprayed inside the conveyor pipe, and it is allowed to flow out of the conveyor pipe. During the cleaning operation, the spiral conveyor 30 is not in normal use (unloading of the container and the bag). Preferably the aperture 34 is arranged in the upper part of the conveyor pipe 31; 311, and particularly on the opposite side with respect to the second conveyor pipe element 312 and its junction to the first conveyor pipe element 311.

In a preferred embodiment of the invention, the outlet end 30b of the spiral conveyor 30 is provided by a feed device 6 for transferring material from the conveyor pipe 31; 311, 312 further to a suitable forward conveyor, i.e. a second conveyor 7. Preferably the feed device 6 is a compartment feeder or a clamping feeder 61. This type of feeder 61 also separates the conveyor channel of the conveyor pipe 31, 311, 312 and the second conveyor 7 provided in succession to the feeder.

In a preferred embodiment of the invention, the second conveyor 7 comprises a second conveyor pipe 71 and a pressurized air source 72, such as a blower, connected thereto. In that case the conveyor pipe 31; 312 of the spiral conveyor 30 is connected at the outlet end, by intermediation of a feed device, particularly a compartment feeder or a clamping feeder 61, to a second conveyor pipe 71, particularly to its inlet end, to which also the pressurized air source 72 is connected by a suitable connection.

When the container K and the bag 2 fitted therein are unloaded with the unloading device 1, the material discharged through the conveyor pipe 31; 311, 312 of the spiral conveyor 30 is transferred, by the feed device 6; 61 further to the first end of the second conveyor pipe 71, from which the material is further conveyed along the second conveyor pipe 71 by pressurized air fed from the pressurized air source 72 to a storage container or the like.

In an embodiment of the invention, the spiral conveyor 30 of the unloading device 1 is provided with a shutter 35, such as a shutter plate, which is preferably arranged at the outlet end 30b of the conveyor pipe, before the feed device 6; 61 or the like, in case it is used in the embodiment in question. By means of the shutter 35, the transferring of the material out of the container K and the bag 2 can be rapidly interrupted, for instance in case of an emergency. The shutter 35 is fitted at the other end of the conveyor pipe 31, preferably in the second conveyor pipe element 312. The shutter 35 is shifted from the rest position from outside the spiral conveyor 30, such as from outside the second conveyor pipe element 312, to the work position, transversally in the conveyor channel, which is thus closed, and the material is prevented from proceeding in the spiral conveyor. When the acute shutting situation is over, the shutter 35 is shifted out of the conveyor channel, back to the rest position, and thus the conveyor channel is opened, so that the material again has free access to proceed through the spiral conveyor 30.

In a preferred embodiment of the invention, the unloading device 1 comprises means for adjusting the position of the spiral conveyor 30 with respect to the unloading surface 10 and particularly the container K (and the bag 2) arranged on the unloading surface. Now the position of the spiral conveyor 30, and particularly of the conveyor screw 32, is arranged to be adjustable at least in the direction of the longitudinal axis A - A of the conveyor screw 32 and at the same time in the longitudinal direction B - B of the container and the bag. In addition to this, it is advantageous that the position of the spiral conveyor 30, and particularly of the conveyor screw 32, is arranged to be adjustable also on the transversal plane against the longitudinal direction B - B of the container and the bag. By means of said adjustments, the spiral conveyor 30 of the unloading device 1 can be fitted on the unloading surface 10 to match the discharge channel 21 of the bag 2 and also at a suitable depth inside the bag 2 before the unloading step proper. It is pointed out that the discharge channel 21 may on the transversal plane of the container be located at a different location in different unloaded containers, depending on the bag 2.

In a preferred embodiment of the invention, the first elements for adjusting the position of the spiral conveyor 30 include a frame 8 divided into two parts, i.e. to frame parts 81, 82, said parts being movable at an angle, preferably an angle of 90 degrees, with respect to each other. Now for example the auxiliary frame 82, i.e. the second frame part 82, is fitted to be movable in a first direction x and on a first trajectory in the first frame part 81. Moreover, the spiral conveyor 30 is fitted to be movable in a second direction y and on a second trajectory in the second frame part 82, so that it can also be locked in place. In that case the position of the spiral conveyor 30 with respect to the first frame part 81 can be adjusted in two directions, i.e. in the directions x and y, i.e. on the plane formed by them, and locked in place preferably before the unloading step proper.

The auxiliary frame 82 is advantageously realized as a first sledge or the like, which can be moved and locked in place in the first straight guides 83; 83a, 83b of the first frame part 81, supported by suitable first runners 84; 84a, 84b. Preferably the guides 83; 83a, 83b extend along the whole width of the unloading surface 10 and the container K. Moreover, in between the first and second frame parts 81, 82, there is arranged a first conveyor device 82, such as a forward screw or a hydraulic cylinder, by means of which conveyor device the motion of the auxiliary frame 82 with respect to the first frame part 81 is realized. The guides 83; 83a, 83b are advantageously placed at right angles to the longitudinal axis A - A of the conveyor screw 32 of the spiral conveyor 30, and this direction also is the direction of the trajectory of the auxiliary frame 82, i.e. the first direction x.

The spiral conveyor 30 is advantageously provided with support elements 89; 89a, 89b, and with second runners 88; 88a, 88b provided in connection with said support elements, said second runners being arranged to proceed in the second direction y and on the second trajectory in the second guides 86; 86a, 86b arranged in the second frame part 82. The spiral conveyor 30 is, together with the support elements 89; 89a, 89b (i.e. the third frame part), such as support flanges or the like, formed to constitute a second sledge or the like. This is movable in the second guides 86; 86a, 86b, in the second frame part 82, between two predetermined stations, by means of a second conveyor device 87, such as a conveyor screw and an electric motor, or even by a manual crank handle 87a. Preferably the second guides 86 are also in parallel with the longitudinal axis A - A of the conveyor screw 32 of the spiral conveyor 30, and said direction also is the adjusting direction of the position of the spiral conveyor 30 in relation to the second frame part 82.

In a preferred embodiment, the means for adjusting the position of the spiral conveyor 30 also include third means for adjusting the vertical distance of the spiral conveyor 30 with respect to the unloading surface 10. Said third means can be realized for example so that the auxiliary frame 82 belonging to the frame 8 is attached to the first frame part 81, so that it is movable in the vertical direction, i.e. in the third direction z, at right angles to the plane formed by the directions x and y (preferably along suitable guides), i.e. at right angles to the unloading surface 10, most advantageously by means of a third conveyor device.

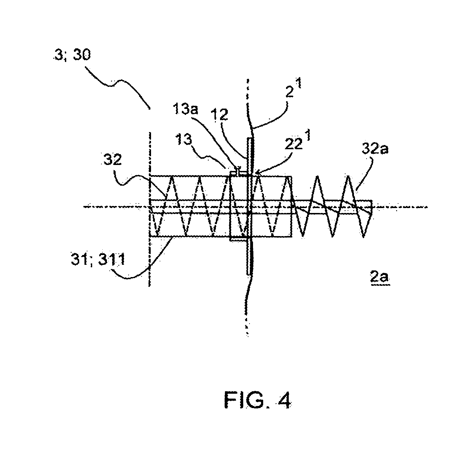

As was already pointed out above, some known large bags 2¹ are not provided with any separate discharge channels. When the container with the bag 2¹ should be emptied, the bag is opened at an outlet aperture 22¹ to be cut therein, in which aperture the spiral conveyor 30 serving as the unloading device 3 is fitted (cf. figure 4). In size, such as in diameter, the outlet aperture 22¹ is preferably as large or somewhat larger than the transversal area or diameter of the spiral conveyor 30, particularly that of the conveyor pipe 31. It is advantageous to utilize a separate collar 12 in between the spiral conveyor and the bag. The collar 12 is set in place around the conveyor pipe 31 and fastened at a suitable spot by means of a locking element 13, which is either a separate element with respect to the collar, or an element that forms part of the collar, for instance one or several clamping screws 13a. The collar 12 is compressed by the spiral conveyor 30; 31 against the bag 2¹ around the outlet aperture 22¹. The collar 12 prevents the fluid material contained in the bag 2¹ from flowing out in between the outlet aperture 22¹ and the spiral conveyor, particularly the conveyor pipe 31. Thereafter the bag 2¹ is unloaded through the outlet aperture 22¹ by using the spiral conveyor 30 in similar fashion as the bags 2, which are provided with a discharge channel 21.

The invention is not restricted to the above described preferred embodiment only, but many modifications are possible within the scope of the invention defined in the appended claims.

## Claims

1. A method for unloading a container, said container (K) including an elastic bag (2, 2¹) containing granular material (M), the bag (2,2¹) having an outlet aperture (22,22¹) at a second end thereof, **characterized in that** in the method
- the container (K) complete with the bag (2, 2¹) is arranged on an unloading surface (10), provided with an unloading device (1);
- the first end (Ka) of the container (K), and the outlet aperture (22; 22¹) provided at the second end, i.e. the discharge end of the bag (2; 2¹), are opened;
- the unloading device (1) comprises unloading means (3) having a spiral conveyor (30) comprising a conveyor pipe (31) and a conveyor screw (32) arranged therein, said spiral conveyor being fitted, before the unloading step proper, in the outlet aperture (22; 22¹) provided at the other end of the bag (2; 2¹), so that the spiral conveyor (30) extends to the interior (2a) of the bag, and to the material (M) contained therein;
- whereafter the material (M) is conveyed out of the bag (2,2¹) along the conveyor pipe (31) by using the spiral conveyor (30); and where
- as the unloading proceeds and the bag is gradually emptied, the unloading surface (10) and the container (K) attached thereto, with the included bag (2; 2¹) and the unloading means (3), are lifted to an inclined position (C) with respect to the longitudinal direction (B - B) of the container (K), so that the first end (Ka) of the container and the discharge end of the bag (2,2¹) are positioned lower than the other end (Kb) of the container, so that material contained in the bag (2,2¹) can be transferred, by means of gravity, to the discharge end of the bag and unloaded by the unloading device (1).

2. A method according to claim 1 for unloading a container, **characterized in that** the free end (32a) of the conveyor screw (32) of a spiral conveyor (30) is arranged to extend to outside the inlet aperture (31 a) of the conveyor pipe (31), to a distance (s), said free end (32a) of said conveyor screw (32) being arranged to extend from the outlet aperture (22; 22¹) to the interior (2a) of the bag (2,2¹).

3. A method according to claim 1 or 2 for unloading a container, **characterized in that** the longitudinal axis (A - A) of the conveyor screw (32) of the conveyor pipe (31) is arranged essentially in the longitudinal direction (B - B) of the container (K) and at the same time of the bag (2,2¹).

4. A method according to claim 1, 2 or 3 for unloading a container, **characterized in that** at least one extension (321) is arranged to be connected to the conveyor screw (32) of the spiral conveyor (30) for extending said screw (32).

5. A method according to any of the preceding claims for unloading a container, **characterized in that** the position of the spiral conveyor (30), and particularly of the conveyor screw (32), is arranged to be adjustable in the direction of the longitudinal axis (A - A) of the conveyor screw (32) and at the same time in the longitudinal direction (B - B) of the bag (2,2¹), and/or that the position of the spiral conveyor (30), and particularly of the conveyor screw (32), is arranged to be adjustable on the transversal plane against the longitudinal direction (B - B) of the container (K) and the bag (2,2¹).

6. A method according to any of the preceding claims for unloading a container, **characterized in that** the outlet end (31 b) of the conveyor pipe (31) of the spiral conveyor (30) is connected to another conveyor (7), by means of which the material unloaded from the bag (2,2¹) is fed further.

7. A method according to claim 6 for unloading a container, **characterized in that** in between the outlet end (31 b) of the conveyor pipe (31) of the spiral conveyor (30) and the second conveyor (7), there is arranged a feed device (6; 61).

8. An arrangement for unloading a container, said container (K) including an elastic bag (2, 2¹) containing granular material (M), the bag having an outlet aperture (22,22¹) at a second end thereof, which arrangement comprises:
- an unloading surface (10) that is provided with a lifting device (11) for lifting the other end (10b) of the unloading surface, on which unloading surface the container (K) with the bag (2; 2¹) should be attached, so that the container is placed in the longitudinal direction (B - B) of the unloading surface, and the first end (Ka) of the container and the second end of the bag (2; 2¹), i.e. the discharge end, is located at the first end (10a) of the unloading surface (10); and
- an unloading device (1), which is attached at the first end (10a) of the unloading surface (10), which unloading device (1) comprises an unloading means (3), **characterized in that** the unloading means (3) comprises a spiral conveyor (30) provided with a conveyor pipe (31) and a conveyor screw (32) arranged therein, which spiral conveyor (30) should be fitted, before the unloading step proper, in the outlet aperture (22; 22¹) provided at the second end of the bag (2), so that the spiral conveyor (30) extends to the interior (2a) of the bag (2,2¹), and to the material (M) contained therein;
the arrangement being such that, the material (M) is conveyed out of the bag (2,2¹) along the conveyor pipe (31) by using the spiral conveyor (30); and where, as the unloading process proceeds and the bag (2,2¹) is emptied, the unloading surface (10) together with the container provided with the bag (2; 2¹) and the unloading device (1) can be lifted to an inclined position (C) in the longitudinal direction (B - B) of the container, so that the first end (Ka) of the bag (2,2¹), the outlet end of the bag (2,2¹) and at the same time the unloading device (1) are positioned lower than the other (Kb) end of the container (K), in which case that material contained in the bag can be transferred,
by means of gravity, to the discharge end of the bag (2,2¹) and unloaded by the unloading device (1) out of the bag (2,2¹) along the conveyor pipe (31) of the spiral conveyor (30).

9. An arrangement according to claim 8 for unloading a container, **characterized in that** the first end (32a) of the conveyor screw (32) extends to outside the inlet aperture (31 a) of the conveyor pipe (31), to a distance (s) therefrom, and that the free end (32a) of the conveyor screw (32) is in the unloading step arranged to extend from the outlet aperture (22) to the interior (2a) of the bag (2,2¹).

10. An arrangement according to claim 8 or 9 for unloading a container, **characterized in that** the unloading device (1) comprises a pipe (5), the free end of which is arranged to extend to the area of the free end (32a) of the conveyor screw (32), and the other end of which is connected to an auxiliary medium source, such as a liquid and/or gas source, preferably a pressurized air source, by which fluid medium is fed to the free end of the conveyor screw (32) and to the material (M) to be unloaded from the bag (2,2¹).

11. An arrangement for unloading a container according to any of the preceding claims 8 - 10, **characterized in that** the spiral conveyor (30) comprises at least one extension (321) that can be connected to the conveyor screw (32), particularly to the free end (32a) thereof, in order to extend the length of said screw (32).

12. An arrangement for unloading a container according to any of the preceding claims 8 - 11, **characterized in that** the conveyor pipe (31) of the spiral conveyor (30) comprises a first conveyor pipe element (311), at the first end of which, and at the same time at the inlet end (3a) of the spiral conveyor, the conveyor screw (32) is arranged to protrude, and in which spiral conveyor (30) the actuating motor (33) of the conveyor screw (32), preferably an electric motor, is advantageously fitted at the other end of the first conveyor pipe element (311) of the conveyor pipe (31), on the longitudinal axis (A - A) of the conveyor screw (32), outside the channel formed by the conveyor pipe (31), and that the conveyor pipe (31) of the spiral conveyor (30) comprises a second conveyor pipe element (312), which is arranged at an angle (α) with respect to the first element (311) of the discharge channel, at the other end thereof, the outlet end of said other element being provided with a feeder (6), preferably a clamping feeder (61) for transferring material (M) out of the discharge channel (31).

13. An arrangement for unloading a container according to any of the preceding claims 8 - 12, **characterized in that** the unloading device (1) comprises a frame (8; 81, 82), in connection with which the spiral conveyor (3) is arranged, said frame being provided with fastening means (9) for fastening the device detachably to the unloading surface (10).

14. An arrangement for unloading a container according to
claim 13, **characterized in that** in connection with the frame (8; 81, 82), there are provided means for adjusting the position of the spiral conveyor (30), particularly the position of the conveyor pipe (31), at least in the direction of the longitudinal axis (A - A) of the conveyor screw (32), and at the same time in the longitudinal direction (B - B) of the container (K), and advantageously also means for adjusting the position of the spiral conveyor (30), particularly the position of the conveyor screw (32), on a transversal plane against the longitudinal direction (B-B) of the container (K).

## Patentansprüche

1. Verfahren zum Entladen eines Behälters, wobei der Behälter (K) einen Granulatmaterial (M) enthaltenden elastischen Beutel (2, 2¹) umfasst, wobei der Beutel (2, 2¹) an seinem zweiten Ende eine Auslassöffnung (22, 22¹) aufweist, **dadurch gekennzeichnet, dass** bei dem Verfahren
- der Behälter (K) zusammen mit dem Beutel (2, 2¹) auf einer mit einer Entladevorrichtung (1) versehenen Entladefläche (10) angeordnet wird;
- das erste Ende (Ka) des Behälters (K) und die an dem zweiten Ende, d.h. dem Auslassende des Beutels (2; 2¹), vorgesehene Auslassöffnung (22; 22¹) geöffnet werden;
- die Entladevorrichtung (1) Entlademittel (3) aufweist, umfassend einen Spiralförderer (30), umfassend ein Förderrohr (31) und eine darin angeordnete Förderschnecke (32), wobei der Spiralförderer vor dem eigentlichen Entladeschritt in die am anderen Ende des Beutels (2; 2¹) vorgesehene Auslassöffnung (22; 22¹) eingepasst wird, so dass sich der Spiralförderer (30) in das Innere (2a) des Beutels und zu dem darin enthaltenen Material (M) erstreckt;
- das Material (M) anschließend aus dem Beutel (2, 2¹) heraus durch Verwenden des Spiralförderers (30) entlang des Förderrohrs (31) gefördert wird; und wobei
- während das Entladen voranschreitet und der Beutel nach und nach entleert wird, die Entladefläche (10) und der daran befestigte Behälter (K) mit dem eingeschlossenen Beutel (2; 2¹) und dem Entlademittel (3) zu einer geneigten Stellung (C) bezüglich der Längsrichtung (B - B) des Behälters angehoben werden, so dass das erste Ende (Ka) des Behälters und das Auslassende des Beutels (2, 2¹) tiefer positioniert werden als das andere Ende (Kb) des Behälters, so dass das in dem Beutel (2, 2¹) enthaltene Material mittels der Schwerkraft zu dem Auslassende des Beutels transportiert und durch die Entladevorrichtung (1) entladen werden kann.

2. Verfahren nach Anspruch 1 zum Entladen eines Behälters, **dadurch gekennzeichnet, dass** das freie Ende (32a) der Förderschnecke (32) eines Spiralförderers (30) dazu angeordnet ist, sich nach außerhalb der Einlassöffnung (31 a) des Förderrohrs (31) über einen Abstand (s) dazu zu erstrecken, wobei das freie Ende (32a) der Förderschnecke (32) dazu angeordnet ist, sich von der Ausgangsöffnung (22; 22¹) zum Inneren (2a) des Beutels (2, 2¹) zu erstrecken.

3. Verfahren nach Anspruch 1 oder 2 zum Entladen eines Behälters, **dadurch gekennzeichnet, dass** die Längsachse (A - A) der Förderschnecke (32) des Förderrohrs (31) im Wesentlichen in der Längsrichtung (B - B) des Behälters (K) und gleichzeitig des Beutels (2, 2¹) angeordnet ist.

4. Verfahren nach Anspruch 1, 2 oder 3 zum Entladen eines Behälters, **dadurch gekennzeichnet, dass** zum Erweitern der Schnecke (32) wenigstens eine Erweiterung (321) dazu ausgebildet ist, mit der Förderschnecke (32) des Spiralförderers (30) verbunden zu werden.

5. Verfahren nach einem der vorangehenden Ansprüche zum Entladen eines Behälters, **dadurch gekennzeichnet, dass** die Stellung des Spiralförderers (30) und insbesondere der Förderschnecke (32) dazu angeordnet ist, in Richtung der Längsachse (A - A) der Förderschnecke (32) und gleichzeitig in der Längsrichtung (B - B) des Beutels (2, 2¹) einstellbar zu sein, und/oder, dass die Stellung des Spiralförderers (30) und insbesondere der Förderschnecke (32) dazu angeordnet ist, in der Querebene zur Längsrichtung (B - B) des Behälters (K) und des Beutels (2, 2¹) einstellbar zu sein.

6. Verfahren nach einem der vorangehenden Ansprüche zum Entladen eines Behälters, **dadurch gekennzeichnet, dass** das Auslassende (31 b) des Förderrohrs (31) des Spiralförderers (30) mit einer anderen Fördervorrichtung (7) verbunden ist, mittels der das aus dem Beutel (2, 2¹) entladene Material weiter transportiert wird.

7. Verfahren nach Anspruch 6 zum Entladen eines Behälters, **dadurch gekennzeichnet, dass** zwischen dem Auslassende (31 b) des Förderrohrs (31) des Spiralförderers (30) und der zweiten Fördervorrichtung (7) eine Zuführvorrichtung (6; 61) angeordnet ist.

8. Anordnung zum Entladen eines Behälters, wobei der Behälter (K) einen Granulatmaterial (M) enthaltenden elastischen Beutel (2, 2¹) umfasst, wobei der Beutel an seinem zweiten Ende eine Auslassöffnung (22, 22¹) aufweist, wobei die Anordnung umfasst:
- eine Entladefläche (10), welche mit einer Hebevorrichtung (11) zum Anheben des anderen Endes (10b) der Entladefläche versehen ist, wobei auf der Entladefläche der Behälter (K) mit dem Beutel (2: 2¹) befestigt sein sollte, so dass der Behälter in der Längsrichtung (B - B) der Entladefläche platziert ist, und das erste Ende (Ka) des Behälters und das zweite Ende des Beutels (2; 2¹), d.h. das Auslassende, am ersten Ende (10a) der Entladefläche (10) angeordnet ist; und
- eine Entladevorrichtung (1), welche an dem ersten Ende (10a) der Entladefläche (10) befestigt ist, wobei die Entladevorrichtung (1) ein Entlademittel (3) umfasst, **dadurch gekennzeichnet, dass** das Entlademittel (3) einen Spiralförderer (30) umfasst, welcher mit einem Förderrohr (31) und einer darin angeordneten Förderschnecke (32) versehen ist, wobei der Spiralförderer (30) vor dem eigentlichen Entladeschritt in die am zweiten Ende des Beutels (2) vorgesehene Auslassöffnung (22; 22¹) eingepasst sein sollte, so dass sich der Spiralförderer (30) in das Innere (2a) des Beutels (2, 2¹) und zu dem darin enthaltenen Material (M) erstreckt;
wobei die Anordnung derart ist, dass das Material (M) aus dem Beutel (2, 2¹) heraus durch Verwenden des Spiralförderers (30) entlang des Förderrohrs (31) gefördert wird; und wobei, während das Entladen voranschreitet und der Beutel (2,2¹) nach und nach entleert wird, die Entladefläche (10) zusammen mit dem Behälter (K), der mit dem eingeschlossenen Beutel (2, 2¹) und der Entladevorrichtung (1) versehen ist, zu einer geneigten Stellung (C) in der Längsrichtung (B - B) des Behälters angehoben werden kann, so dass das erste Ende (Ka) des Beutels (2, 2¹) und das Auslassende des Beutels (2, 2¹) und gleichzeitig die Entladevorrichtung (1) tiefer positioniert sind als das andere Ende (Kb) des Behälters (K), in welchem Fall das in dem Beutel enthaltene Material mittels der Schwerkraft zu dem Auslassende des Beutels (2, 2¹) transportiert und durch die Entladevorrichtung (1) aus dem Beutel (2, 2¹) heraus entlang des Förderrohrs (31) des Spiralförderers (30) entladen werden kann.

9. Anordnung nach Anspruch 8 zum Entladen eines Behälters, **dadurch gekennzeichnet, dass** sich das erste Ende (32a) der Förderschnecke (32) nach außerhalb der Einlassöffnung (31 a) des Förderrohrs (31) über einen Abstand (s) dazu erstreckt, und dass das freie Ende (32a) der Förderschnecke (32) während des Entladeschritts dazu angeordnet ist, sich von der Ausgangsöffnung (22) zum Inneren (2a) des Beutels (2, 2¹) zu erstrecken.

10. Anordnung nach Anspruch 8 oder 9 zum Entladen eines Behälters, **dadurch gekennzeichnet, dass** die Entladevorrichtung (1) ein Rohr (5) umfasst, dessen freies Ende dazu ausgebildet ist, sich in den Bereich des freien Endes (32a) der Förderschnecke (32) zu erstrecken, und dessen anderes Ende mit einer Zusatzquelle eines Mediums, wie beispielsweise einer Flüssigkeitsquelle und/oder einer Gasquelle, verbunden ist, vorzugsweise mit einer Druckluftquelle, mittels welcher flüssiges Medium zu dem freien Ende der Förderschnecke (32) und zu dem aus dem Beutel (2, 2¹) zu entladenden Material (M) geführt wird.

11. Anordnung zum Entladen eines Behälters nach einem der vorangehenden Ansprüche 8-10, **dadurch gekennzeichnet, dass** der Spiralförderer (30) wenigstens eine Erweiterung (321) umfasst, welche mit der Förderschnecke (32) verbunden werden kann, insbesondere mit ihrem freien Ende (32a), um die Länge der Schnecke (32) zu vergrößern.

12. Anordnung zum Entladen eines Behälters nach einem der vorangehenden Ansprüche 8-11, **dadurch gekennzeichnet, dass** das Förderrohr (31) des Spiralförderers (30) ein erstes Förderrohrelement (311) umfasst, an dessen ersten Ende, wie auch gleichzeitig an dem Einlassende (3a) des Spiralförderers, die Förderschnecke (32) dazu angeordnet ist, überzustehen, und wobei der Spiralförderer (30) und der Antriebsmotor (33) der Förderschnecke (32), vorzugsweise ein Elektromotor, vorteilhafterweise an dem anderen Ende des ersten Förderrohrelements (311) des Förderrohrs (31) an der Längsachse (A - A) der Förderschnecke (32) außerhalb des durch das Förderrohr (31) gebildeten Kanals eingepasst ist, und dass das Förderrohr (31) des Spiralförderers (30) ein zweites Förderrohrelement (312) umfasst, welches in einem Winkel (α) bezüglich des ersten Elements (311) des Auslasskanals am anderen Ende daran angeordnet ist, wobei das Auslassende des anderen Elements mit einem Zuführer (6), vorzugsweise einem Klemmzuführer (61) zum Transportieren von Material (M) aus dem Auslasskanal (31) hinaus, versehen ist.

13. Anordnung zum Entladen eines Behälters nach einem der vorangehenden Ansprüche 8-12, **dadurch gekennzeichnet, dass** die Entladevorrichtung (1) einen Rahmen (8; 81, 82) umfasst, mit dem der Spiralförderer (3) in Verbindung angeordnet ist, wobei der Rahmen mit Befestigungsmitteln (9) zum lösbaren Befestigen der Vorrichtung an der Entladefläche (10) versehen ist.

14. Anordnung zum Entladen eines Behälters nach Anspruch 13, **dadurch gekennzeichnet, dass** in Verbindung mit dem Rahmen (8; 81, 82) Mittel zum Einstellen der Stellung des Spiralförderers (30) vorgesehen sind, insbesondere die Stellung des Förderrohrs (31), wenigstens in Richtung der Längsachse (A - A) der Förderschnecke (32), und gleichzeitig in der Längsrichtung (B - B) des Behälters (K) und vorteilhafterweise ferner Mittel zum Einstellen der Stellung des Spiralförderers (30) vorgesehen sind, insbesondere der Stellung der Förderschnecke (32) in einer Querebene zur Längsrichtung (B - B) des Behälters (K).

## Revendications

1. Procédé pour décharger un conteneur, ledit conteneur (K) comprenant un sac élastique (2, 2¹) contenant une matière granulaire (M), le sac (2, 2¹) ayant une ouverture de sortie (22, 22¹) dans sa deuxième extrémité, **caractérisé en ce que** dans le Procédé :
le conteneur (K) doté du sac (2, 2¹) est agencé sur une surface de déchargement (10) comportant un dispositif de déchargement (1) ;
la première extrémité (Ka) du conteneur (K) et l'ouverture de sortie (22 ; 22¹) prévue dans la deuxième extrémité, c'est-à-dire l'extrémité de décharge du sac (2 ; 2¹), sont ouvertes ;
le dispositif de déchargement (1) comprend des moyens de déchargement (3) ayant un convoyeur hélicoïdal (30) comprenant un tuyau de transport (31) et une vis de convoyeur (32) agencée dans ce dernier, ledit convoyeur hélicoïdal étant monté, avant l'étape de déchargement elle-même, dans l'ouverture de sortie (22 ; 22¹) prévue dans l'autre extrémité du sac (2 ; 2¹), de sorte que le convoyeur hélicoïdal (30) s'étend à l'intérieur (2a) du sac, et vers la matière (M) contenue à l'intérieur de ce dernier ;
après quoi, la matière (M) est transportée hors du sac (2, 2¹) le long du tuyau de transport (31) en utilisant le convoyeur hélicoïdal (30) ; et dans lequel :
au fur et à mesure que le déchargement a lieu et que le sac est progressivement vidé, la surface de déchargement (10) et le conteneur (K) fixé à celle-ci, avec le sac (2 ; 2¹) compris et les moyens de déchargement (3), sont levés dans une position inclinée (C) par rapport à la direction longitudinale (B - B) du conteneur (K) de sorte que la première extrémité (Ka) du conteneur et l'extrémité de décharge du sac (2 ; 2¹) sont plus basses que l'autre extrémité (Kb) du conteneur, de sorte que la matière contenue dans le sac (2, 2¹) peut être transférée, par gravité, à l'extrémité de décharge du sac et déchargée par le dispositif de déchargement (1).

2. Procédé selon la revendication 1 pour décharger un conteneur, **caractérisé en ce que** l'extrémité libre (32a) de la vis de convoyeur (32) du convoyeur hélicoïdal (30) est agencée pour s'étendre vers l'extérieur de l'ouverture d'entrée (31a) du tuyau de transport (31) sur une distance (s), ladite extrémité libre (32a) de ladite vis de convoyeur (32) étant agencée pour s'étendre à partir de l'ouverture de sortie (22 ; 22¹) jusqu'à l'intérieur (2a) du sac (2 ; 2¹).

3. Procédé selon la revendication 1 ou 2 pour décharger un conteneur, **caractérisé en ce que** l'axe longitudinal (A - A) de la vis de convoyeur (32) du tuyau de transport (31) est agencé essentiellement dans la direction longitudinale (B - B) du conteneur (K) et en même temps, du sac (2 ; 2¹).

4. Procédé selon la revendication 1, 2 ou 3 pour décharger un conteneur, **caractérisé en ce qu'**au moins une extension (321) est agencée pour être raccordée à la vis de convoyeur (32) du convoyeur hélicoïdal (30) pour étendre ladite vis (32).

5. Procédé selon l'une quelconque des revendications précédentes pour décharger un conteneur, **caractérisé en ce que** la position du convoyeur hélicoïdal (30) et en particulier de la vis de convoyeur (32), est agencée pour être ajustable dans la direction de l'axe longitudinal (A - A) de la vis de convoyeur (32) et en même temps dans la direction longitudinale (B - B) du sac (2 ; 2¹) et/ou **en ce que** la position du convoyeur hélicoïdal (30) et en particulier de la vis de convoyeur (32) est agencée pour être ajustable sur le plan transversal contre la direction longitudinale (B - B) du conteneur (K) et du sac (2 ; 2¹).

6. Procédé selon l'une quelconque des revendications précédentes pour décharger un conteneur, **caractérisé en ce que** l'extrémité de sortie (31b) du tuyau de transport (31) du convoyeur hélicoïdal (30) est raccordée à un autre convoyeur (7) au moyen duquel la matière déchargée du sac (2 ; 2¹) est en outre alimentée.

7. Procédé selon la revendication 6 pour décharger un conteneur, **caractérisé en ce qu'**entre l'extrémité de sortie (31b) du tuyau de transport (31) du convoyeur hélicoïdal (30) et le deuxième convoyeur (7), on agence un dispositif d'alimentation (6 ; 61).

8. Agencement pour décharger un conteneur, ledit conteneur (K) comprenant un sac élastique (2 ; 2¹) contenant une matière granulaire (M), le sac ayant une ouverture de sortie (22 ; 22¹) dans sa deuxième extrémité ; lequel agencement comprend :
une surface de déchargement (10) qui comporte un dispositif de levage (11) pour lever l'autre extrémité (10b) de la surface de déchargement, sur laquelle surface de déchargement, le conteneur (K) avec le sac (2 ; 2¹) doivent être fixés, de sorte que le conteneur est placé dans la direction longitudinale (B - B) de la surface de déchargement, et la première extrémité (Ka) du conteneur et la deuxième extrémité du sac (2 ; 2¹), c'est-à-dire l'extrémité de déchargement, sont positionnées au niveau de la première extrémité (10a) de la surface de déchargement (10) ; et
un dispositif de déchargement (1) qui est fixé dans la première extrémité (10a) de la surface de déchargement (10), lequel dispositif de déchargement (1) comprend des moyens de déchargement (3), **caractérisé en ce que** les moyens de déchargement (3) comprennent un convoyeur hélicoïdal (30) comportant un tuyau de transport (31) et une vis de convoyeur (32) agencée à l'intérieur de ce dernier, lequel convoyeur hélicoïdal (30) doit être monté, avant l'étape de déchargement elle-même, dans l'ouverture de sortie (22 ; 22¹) dans la deuxième extrémité du sac (2), de sorte que le convoyeur hélicoïdal (30) s'étend vers l'intérieur (2a) du sac (2 ; 2¹) et vers la matière (M) contenue à l'intérieur de ce dernier ;
l'agencement étant tel que la matière (M) est transportée hors du sac (2 ; 2¹) le long du tuyau de transport (31) en utilisant le convoyeur hélicoïdal (30) ; et dans lequel, au fur et à mesure que le processus de déchargement a lieu et que le sac (2 ; 2¹) est vidé, la surface de déchargement (10) conjointement avec le conteneur doté du sac (2 ; 2¹) et le dispositif de déchargement (1), peuvent être levés dans une position inclinée (C) dans la direction longitudinale (B - B) du conteneur, de sorte que la première extrémité (Ka) du sac (2 ; 2¹), l'extrémité de sortie du sac (2 ; 2¹) et en même temps, le dispositif de déchargement (1) sont plus bas que l'autre extrémité (Kb) du conteneur (K), auquel cas la matière contenue dans le sac peut être transférée, par la gravité, à l'extrémité de décharge du sac (2 ; 2¹) et déchargée par le dispositif de déchargement (1) hors du sac (2 ; 2¹) le long du tuyau de transport (31) du convoyeur hélicoïdal (30).

9. Agencement selon la revendication 8 pour décharger un conteneur, **caractérisé en ce que** la première extrémité (32a) de la vis de convoyeur (32) s'étend vers l'extérieur de l'ouverture d'entrée (31a) du tuyau de transport (31) sur une distance (s) à partir de ce dernier et **en ce que** l'extrémité libre (32a) de la vis de convoyeur (32) est agencée, à l'étape de déchargement, pour s'étendre à partir de l'ouverture de sortie (22) jusqu'à l'intérieur (2a) du sac (2 ; 2¹).

10. Agencement selon la revendication 8 ou 9 pour décharger un conteneur, **caractérisé en ce que** le dispositif de déchargement (1) comprend un tuyau (5), dont l'extrémité libre est agencée pour s'étendre jusqu'à la zone de l'extrémité libre (32a) de la vis de convoyeur (32) et dont l'autre extrémité est raccordée à une source de fluide auxiliaire, telle qu'une source de liquide et/ou de gaz, de préférence une source d'air sous pression, grâce à laquelle le milieu fluide est amené jusqu'à l'extrémité libre de la vis de convoyeur (32) et jusqu'à la matière (M) à décharger du sac (2 ; 2¹).

11. Agencement pour décharger un conteneur selon l'une quelconque des revendications 8 à 10 précédentes, **caractérisé en ce que** le convoyeur hélicoïdal (30) comprend au moins une extension (321) qui peut être raccordée à la vis de convoyeur (32), en particulier à son extrémité libre (32a), afin de prolonger la longueur de ladite vis (32).

12. Agencement pour décharger un conteneur selon l'une quelconque des revendications 8 à 11 précédentes, **caractérisé en ce que** le tuyau de transport (31) du convoyeur hélicoïdal (30) comprend un premier élément de tuyau de transport (311), à la première extrémité duquel, et en même temps à l'extrémité d'entrée (3a) du convoyeur hélicoïdal, la vis de convoyeur (32) est agencée pour faire saillie, et dans lequel convoyeur hélicoïdal (30), le moteur d'actionnement (33) de la vis de convoyeur (32), de préférence un moteur électrique, est avantageusement monté à l'autre extrémité du premier élément de tuyau de transport (311) du tuyau de transport (31), sur l'axe longitudinal (A - A) de la vis de convoyeur (32), à l'extérieur du canal formé par le tuyau de transport (31) et **en ce que** le tuyau de transport (31) du convoyeur hélicoïdal (30) comprend un deuxième élément de tuyau de transport (312) qui est agencé selon un angle (α) par rapport au premier élément (311) du canal de décharge, à son autre extrémité, l'extrémité de sortie dudit autre élément comportant un dispositif d'alimentation (6), de préférence un dispositif d'alimentation à serrage (61) pour transférer la matière (M) hors du canal de décharge (31).

13. Agencement pour décharger un conteneur selon l'une quelconque des revendications 8 à 12 précédentes, **caractérisé en ce que** le dispositif de déchargement (1) comprend un châssis (8 ; 81, 82) avec lequel est raccordé le convoyeur à spirale (3), ledit châssis étant prévu avec des moyens de fixation (9) pour fixer le dispositif de manière détachable à la surface de déchargement (10).

14. Agencement pour décharger un conteneur selon la revendication 13, **caractérisé en ce que** par rapport au châssis (8 ; 81, 82), on prévoit des moyens pour ajuster la position du convoyeur hélicoïdal (30), en particulier la position du tuyau de transport (31), au moins dans la direction de l'axe longitudinal (A - A) de la vis de convoyeur (32) et en même temps dans la direction longitudinale (B - B) du conteneur (K) et avantageusement également des moyens pour ajuster la position du convoyeur hélicoïdal (30), en particulier la position de la vis de convoyeur (32), sur un plan transversal contre la direction longitudinale (B - B) du conteneur (K).
